Europäisches Patentamt

European Patent Office

Office européen des brevets

(19)

(11) **EP 0 691 659 B1**

(12) **FASCICULE DE BREVET EUROPEEN**

(45) Date de publication et mention
de la délivrance du brevet:
**25.03.1998 Bulletin 1998/13**

(51) Int Cl.⁶: **G21F 9/04**, G21F 9/06,
C02F 1/46

(21) Numéro de dépôt: **95401351.2**

(22) Date de dépôt: **12.06.1995**

(54) **Anode consommable, procédé d'électrodissolution appliqué à la décontamination d'effluents liquides faiblement radioactifs, et dispositif de mise en oeuvre de ce procédé**

Opferanode, elektroauflösung flüssiger Schwachradioaktiver Abfälle sowie Vorrichtung zur Durchführung dieses Verfahrens

Sacrificial anode, process for electrodecontamination of low-level liquid radioactive wastes, and device for carrying out this process

(84) Etats contractants désignés:
**BE CH DE ES GB LI**

(30) Priorité: **14.06.1994 FR 9407249**

(43) Date de publication de la demande:
**10.01.1996 Bulletin 1996/02**

(73) Titulaire: **COMMISSARIAT A L'ENERGIE ATOMIQUE
75015 Paris (FR)**

(72) Inventeurs:
• **Federici, Véronique
F-04100 Manosque (FR)**
• **Tronche, Eric
F-19500 Chauffour sur Vell (FR)**
• **Lacoste, Germain
F-31006 Toulouse Cedex (FR)**

(74) Mandataire: **Dubois-Chabert, Guy et al
c/o BREVATOME
25, rue de Ponthieu
75008 Paris (FR)**

(56) Documents cités:
**EP-A- 0 295 696**

• **DATABASE WPI Section Ch, Week 3882, Derwent Publications Ltd., London, GB; Class D15, AN 82-80737E & SU-A-882 945 (DANILOVSKII YU S) 23 Novembre 1981**
• **DATABASE WPI Week 1980, Derwent Publications Ltd., London, GB; AN 80-33722C & JP-A-55 043 478 (JAPAN ATOMIC ENERGY) 28 Mars 1980**
• **INTERNATIONAL JOURNAL OF APPLIED RADIATION AND ISOTOPES, vol.19, UK pages 485 - 487 KEPAK ET AL. 'SORPTION OF RADIORUTHENIUM IN COLLOIDAL AND IONIC STATE ON FERROUS HYDROXIDE FORMED BY ELECTRODISSOLUTION OF IRON ANODE'**
• **DATABASE WPI Section Ch, Week 4688, Derwent Publications Ltd., London, GB; Class D15, AN 88-328566 & SU-A-1 392 144 (ODESS ENG CONS INST) 30 Avril 1988**

## Description

Domaine technique de l'invention

La présente invention se rapporte au domaine du traitement des effluents renfermant de faibles concentrations de radionucléides (moins d'environ $5.10^3$ kBq/litre) tels que, par exemple, le strontium 90 ($^{90}$Sr), l'antimoine 125 ($^{125}$Sb), le césium 137 ($^{137}$Cs) et le ruthénium 106 ($^{106}$Ru).

Plus précisément, l'invention concerne la décontamination de tels effluents par électrodissolution d'une anode, permettant la concentration, sous forme solide et dans un faible volume autorisant un stockage aisé, de la contamination présente dans l'effluent.

Etat de la technique

Un procédé de décontamination d'une solution contenant du ruthénium 106, par la technique de l'électrodissolution d'une anode en fer, est connu selon l'article de F. KEPAK et al., publié dans "International Journal of Applied Radiation and Isotopes", vol. 19, p. 485-487, 1968. Selon la technique décrite dans ce document, le ruthénium est capté par des particules d'hydroxyde de fer. Ces particules sont obtenues par précipitation ou dissolution, par électrolyse, d'une anode en fer. Cette technique est appliquée à une solution renfermant une radioactivité élevée en ruthénium ($42x10^6$ kBq/litre), donc une concentration élevée. Des essais de décontamination par électrodissolution d'une anode en fer sur des effluents dont les concentrations en radioéléments sont de l'ordre de $10^4$ fois plus faibles ont permis d'atteindre des facteurs de décontamination de 20% au maximum pour le ruthénium.

Exposé de l'invention

L'invention a donc pour objet une anode consommable, un procédé d'électrodissolution de cette anode et un dispositif pour sa mise en oeuvre, permettant d'atteindre des taux de décontamination élevés, au moins pour des effluents dont les concentrations en radioéléments sont faibles.

Plus précisément, une anode consommable selon l'invention comporte entre 20 et 70% en masse de fer, entre 20 et 40% en masse de cobalt, et entre 5 et 30% en masse d'aluminium, la somme totale des pourcentages en masse de ces trois éléments étant inférieure ou égale à 100%.

L'électrodissolution d'une telle anode permet de former, dans la solution dans laquelle est plongée l'anode, des hydroxydes mixtes, composés de fer, de cobalt, et d'aluminium. Ces hydroxydes ont un effet entraîneur sur les radioéléments présents dans la solution. L'efficacité de cet effet entraîneur est liée à la présence des trois éléments à la fois.

Selon des variantes de l'anode selon l'invention, celle-ci peut également contenir en outre du nickel (moins de 20% en masse), et/ou du titane (moins de 10% en masse), et/ou du cuivre (moins de 5% en masse), et/ou du niobium (moins de 5% en masse).

La présence de ces éléments additionnels permet d'améliorer la précipitation et l'extraction de certains éléments spécifiques présents dans la solution. Ainsi, la présence dans l'anode de niobium et/ou de titane permet d'améliorer l'extraction d'antimoine. La présence dans l'anode de nickel et/ou de cuivre permet d'améliorer l'extraction de ruthénium.

La composition de l'alliage anodique détermine le type et les proportions du mélange d'hydroxydes insolubles qui sont des supports absorbants entraînant par co-précipitation les radioéléments en solution. En effet, la masse d'hydroxydes métalliques formée est fonction de la masse d'anode dissoute.

L'invention a, également, pour objet un procédé de décontamination d'effluents liquides radioactifs comprenant les étapes suivantes :

- placer une anode telle que décrite ci-dessus, ainsi qu'une cathode, dans l'effluent liquide,
- ramener le pH de l'effluent à une valeur supérieure ou égale à 1,
- établir un courant continu entre l'anode et la cathode, de façon à ce que le potentiel de l'anode soit supérieur à 2 volts/ENH (Electrode Normale Hydrogène).

Avec un tel procédé, l'anode est dissoute pour former des hydroxydes métalliques insolubles qui entraînent par co-précipitation les radioéléments de l'effluent. Avec ce procédé, on a pu atteindre des taux de décontamination supérieurs à 90% pour certains éléments, par exemple l'antimoine et le strontium.

Selon un mode particulier de réalisation du procédé, on fait circuler le courant jusqu'à ce que la quantité d'électricité dépensée soit égale à au moins 8 coulombs par millilitre.

Selon un autre mode particulier de réalisation de l'invention, une partie des boues obtenues après précipitation et entraînement des radioéléments peut être recyclée dans le réacteur, l'autre partie subissant une étape de séparation par décantation, filtration ou centrifugation pour séparer le précipité insoluble d'hydroxydes métalliques de l'effluent.

Selon un autre aspect de l'invention, un dispositif pour la mise en oeuvre d'un procédé de décontamination comporte :

- un réacteur pour recevoir l'effluent à décontaminer,
- une anode telle que décrite ci-dessus,
- une cathode,
- une alimentation en courant continu à laquelle sont reliées l'anode et la cathode,
- un moyen pour porter le pH de la solution à une valeur supérieure ou égale à 1.

Selon un mode particulier de réalisation de ce dispositif, ce dernier peut comprendre en outre une électrode de référence.

Il peut également comprendre un thermocouple de contrôle de la température et un échangeur thermique permettant de maintenir l'effluent à température ambiante.

Il peut comporter en outre des moyens pour recycler une partie des boues sortant du réacteur, et des moyens de séparation solide/liquide pour traiter une autre partie des boues extraites.

## Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

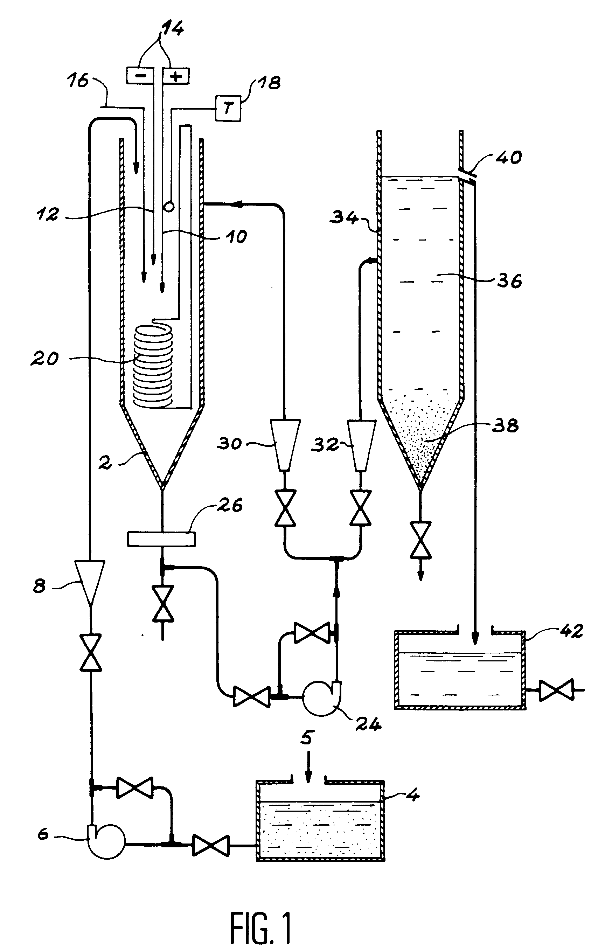

- la figure 1 représente un dispositif pour la mise en oeuvre de l'invention,
- les figures 2 à 4 représentent, pour différentes électrodes et différents effluents, l'évolution des quantités de certains éléments restant dans l'effluent en fonction de la quantité d'électricité dépensée.

## Description détaillée de l'invention

L'anode métallique selon l'invention est constituée d'un alliage métallique comportant entre 20 et 70% en masse de fer, entre 20 et 40% en masse de cobalt, et entre 5 et 30% en masse d'aluminium. A ces constituants de base peuvent éventuellement être additionnés d'autres constituants dans la composition de l'anode.

Ainsi, par exemple, peuvent éventuellement être additionnés des éléments comme :

- le nickel (pourcentage en masse inférieur à 20%),
- et/ou le titane (pourcentage en masse inférieur ou égal à 10%),
- et/ou le cuivre (pourcentage en masse inférieur à 5%),
- et/ou le niobium (pourcentage en masse inférieur à 5%).

Pour obtenir une telle anode, on mélange intimement dans un creuset les poudres des métaux constituant l'alliage ; puis on réalise la fusion de ce mélange de poudres dans un four à induction à une température de 1800°C et sous atmosphère inerte.

Le procédé de décontamination consiste d'abord à placer l'anode selon l'invention, ainsi qu'une cathode, dans l'effluent à traiter. Le pH initial de la solution est ramené, au cas où il serait inférieur à 1, à une valeur supérieure à 1. Dans ces conditions, lors du passage du courant électrique, les hydroxydes produits à la cathode permettent d'augmenter le pH de l'effluent jusqu'à une valeur supérieure à 7,6, au-dessus de laquelle tous les hydroxydes métalliques sont insolubles.

On établit ensuite un courant électrique entre les électrodes, de manière à ce que le potentiel de l'anode soit supérieur à 2 volts/ENH (Electrode Normale Hydrogène), par exemple 5 volts/ENH ou une valeur proche de 5 volts/ENH. Dans ces conditions, l'anode est dissoute pour former des hydroxydes métalliques mixtes insolubles qui entraînent par co-précipitation les radioéléments de l'effluent. Le fer entraîne plus spécifiquement le strontium et l'antimoine, le cobalt, l'antimoine et le ruthénium, l'aluminium, le strontium. Les éléments tels que le nickel, le titane, le cuivre ou le niobium, rajoutés à la composition de l'anode, permettent d'améliorer l'extraction de certains radioéléments. Ainsi, la présence de niobium et/ou de titane permet d'améliorer l'extraction d'antimoine, alors que la présence de nickel et/ou de cuivre permet d'améliorer l'extraction de ruthénium.

L'alliage de l'anode se dissout en produisant un mélange de cations métalliques :

$$M \rightarrow M^{z+} + Ze^{-}.$$

A la cathode, pour chaque ion produit, l'échange électronique induit la réaction :

$$zH_2O + Ze^{-} \rightarrow ZOH^{-} + \frac{z}{2}H_2.$$

Un mélange d'hydroxydes métalliques est produit suivant la réaction :

$$M^{z+} + Z(OH)^{-} \rightarrow M(OH)_z.$$

Ces hydroxydes métalliques sont des supports absorbants qui captent et entraînent par coprécipitation les radioéléments en solution.

Le précipité formé par les hydroxydes métalliques a les caractéristiques avantageuses suivantes qui sont liées à la composition de l'anode :

- il est très insoluble et de ce fait ne pollue pas l'effluent par des cations provenant de l'anode (moins de 0,3% de la masse totale de métal dissous),
- il présente une grande stabilité dans le temps ; en effet, il retient parfaitement les radioéléments fixés, même dans le cas où le potentiel de la solution évolue vers un potentiel d'équilibre,
- les "réactifs" de ce procédé sont uniquement l'électricité et l'anode consommable,
- ce procédé, contrairement aux procédés chimiques, n'entraîne pas d'augmentation de volume de l'effluent.

On peut laisser le procédé se dérouler jusqu'à ce que la quantité d'électricité dépensée soit suffisante pour obtenir la décontamination voulue de l'effluent. Ainsi, on peut laisser le procédé se dérouler jusqu'à ce que la quantité d'électricité dépensée soit au moins égale à 8 coulombs par millilitre, par exemple 9(±1) coulombs par millilitre.

Une étape ultérieure de séparation solide/liquide, par exemple par décantation, filtration ou centrifugation des boues obtenues par la coprécipitation permet de séparer le précipité insoluble d'hydroxydes métalliques de l'effluent liquide traité.

On peut également, selon une variante, réinjecter une partie des boues dans le réacteur. En effet, les boues sont constituées principalement d'hydroxydes métalliques qui sont des absorbants et des entraîneurs de radioéléments ; leur capacité à entraîner les radioéléments n'est pas forcément épuisée dès la première adsorption dans le réacteur, et par conséquent, il peut être intéressant de les réinjecter pour diminuer la masse de boue produite.

Le dispositif pour la mise en oeuvre du procédé va maintenant être décrit. Ce dispositif comprend un réacteur électrochimique 2 destiné à recevoir l'effluent à décontaminer, qui provient d'un réservoir 4 au moyen d'une pompe 6. Le volume d'effluent injecté dans le réacteur est contrôlé par un rotamètre 8.

Pour le bon déroulement du procédé, le pH de la solution injectée dans le réacteur 2 doit être supérieur ou égal à 1.

Dans le réservoir 4 peuvent donc être prévus des moyens 5 pour mesurer et réguler le pH de cette solution. Ces moyens peuvent être par exemple des moyens pour ajouter une solution de soude 10 N jusqu'à ce qu'une électrode de verre couplée à un pH mètre indique une valeur >1.

Dans le réacteur sont disposées une anode consommable 10, et une cathode 12. Ces deux électrodes sont reliées à une alimentation en courant continu 14. L'anode consommable (fer/cobalt/aluminium avec éventuellement nickel et/ou titane et/ou cuivre et/ou niobium) a une composition telle que décrite plus haut, et la cathode peut être par exemple en acier inox. Le réacteur peut également comporter une électrode de référence 16, par exemple une électrode au calomel saturé, un thermocouple de contrôle de la température 18, ainsi qu'un échangeur thermique 20 permettant de maintenir l'effluent à température ambiante.

Les boues, c'est-à-dire les précipités d'hydroxydes métalliques porteurs de radioéléments, peuvent être extraites du réacteur par une pompe 24. Entre la sortie du réacteur et la pompe 24, on peut disposer un filtre 26, qui permet de récupérer éventuellement des morceaux d'anode qui pourraient endommager la pompe de recyclage 24. Une partie du volume des boues extraites du réacteur peut être réinjectée, par l'intermédiaire d'un rotamètre 30, dans ce réacteur. Une autre partie, qui passe par un rotamètre 32, est injectée dans un décanteur de boues 34, qui permet de séparer la solution traitée 36, pauvre en éléments radioactifs, et les boues porteuses des éléments radioactifs 38. La solution traitée peut ensuite être évacuée, par un orifice "trop-plein" 40, vers un réservoir 42.

Selon un exemple, le décanteur de boues 34 reçoit environ 1/10ème du volume des boues sortant du réacteur 2, tandis que les 9/10ème du volume des boues sont recyclés dans le réacteur 2.

Le Tableau I suivant donne trois exemples de composition d'anode, en pourcentage en masse de chacun des constituants. L'anode 1 comprend uniquement les trois éléments cobalt, fer, aluminium.

Des exemples de procédés de décontamination mettant en oeuvre ces anodes sont donnés par la suite.

## TABLEAU I

| % MASSIQUES | Co | Fe | Al | Ni | Ti | Cu | Nb |
|---|---|---|---|---|---|---|---|
| ANODE 1 | 30 | 50 | 20 | 0 | 0 | 0 | 0 |
| ANODE 2 | 24,6 | 52,1 | 5,1 | 14,6 | 1 | 2,6 | 0 |
| ANODE 3 | 35 | 35 | 7,5 | 14 | 4,5 | 3,5 | 0,5 |

### EXEMPLE 1:

Dans cet exemple, on travaille avec l'anode 1, portée au potentiel de 4,9 volts. La quantité d'électricité dépensée au cours du procédé est de 9,8 coulombs par millilitre. La solution choisie est un effluent qui contient une faible radioactivité. Ses caractéristiques sont les suivantes :

- pH = 8,4,
- concentration en $NaNO_3$ : 0,5 M,
- activité en $^{125}$Sb : 1200kBq/l (soit 30 μg de $^{125}$Sb par m$^3$),
- activité en $^{90}$Sr : 220kBq/l (soit 40 μg de $^{90}$Sr par m$^3$),
- activité en $^{106}$Ru : 40kBq/l,
- activité en $^{137}$Cs : 17kBq/l,
- activité en actinide émetteur alpha : 330 Bq/l.

Le Tableau II illustre les performances obtenues par le procédé selon l'invention. Dans ce tableau, est donné le taux de décontamination (TD), c'est-à-dire le pourcentage de chacun des radioéléments éliminés par les précipités formés par électrodissolution. On voit que des taux de décontamination supérieurs à 90% sont obtenus pour l'antimoine, le strontium et le césium. Pour le ruthénium, on obtient un pourcentage de 40%, ce qui se compare avantageusement aux résultats obtenus avec le procédé selon l'art antérieur (électrodissolution d'une anode en fer, pourcentage de 20%).

## TABLEAU II

| ELEMENT | $^{125}$Sb | $^{90}$Sr | $^{106}$Ru | $^{137}$Cs | ACTINIDES |
|---|---|---|---|---|---|
| TD % | 90 | 97,3 | 40 | 90 | >82 |

### EXEMPLE 2 :

Dans cet exemple, on a choisi la même anode portée au même potentiel que dans l'exemple I. La quantité d'électricité dépensée est de 10,1 coulombs par millilitre. L'effluent choisi présente les caractéristiques suivantes :

- pH = 7,05,
- concentration en $NaNO_3$ : 0,4 M,
- activité en $^{125}$Sb : 265kBq/l (soit 30 μg de $^{125}$Sb par m$^3$),
- activité en $^{90}$Sr : 640kBq/l (soit 40 μg de $^{90}$Sr par m$^3$),
- activité en $^{106}$Ru : 366kBq/l,
- activité en $^{137}$Cs : 30kBq/l,
- activité en actinide émetteur alpha : 430 Bq/l.

Le tableau III résume les taux de décontamination des radioéléments éliminés par les précipités électroformés dans cet exemple. On voit que les taux de décontamination atteints sont encore très élevés en ce qui concerne l'antimoine et le strontium (supérieur à 99% en ce qui concerne ce dernier élément).

## TABLEAU III

| ELEMENT | $^{125}Sb$ | $^{90}Sr$ | $^{106}Ru$ | $^{137}Cs$ | ACTINIDES |
|---------|------------|-----------|------------|------------|-----------|
| TD % | 90 | 99,4 | 47 | 60 | >86 |

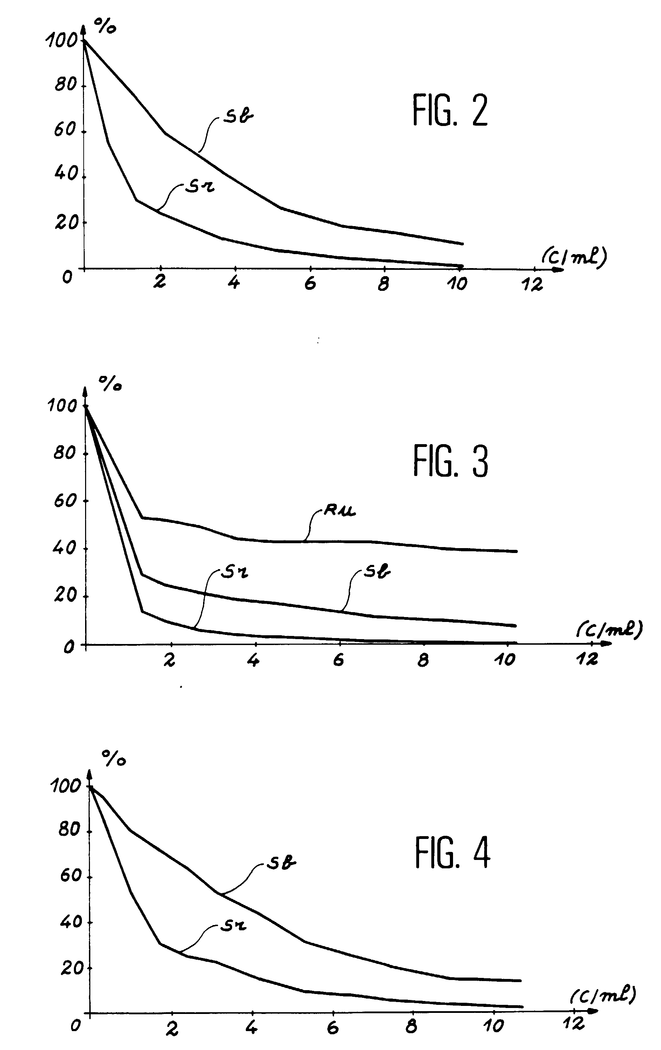

Le graphique de la figure 2 donne les quantités d'antimoine et de strontium restant dans l'effluent de l'exemple 2, (c'est-à-dire la quantité (100-TD)%), en fonction de la quantité d'électricité dépensée dans le circuit, l'anode utilisée étant l'anode 1. On constate que la radioactivité de l'effluent diminue de façon non linéaire, et que la décontamination en strontium est plus rapide que celle de l'antimoine. L'effet de décontamination sur le strontium est très net à partir d'environ 1 ou 2 C/ml. Pour 10 coulombs par millilitre il ne reste pratiquement plus que 10% d'antimoine initial, alors que le strontium a pratiquement disparu.

## EXEMPLE 3 :

Dans cet exemple, l'anode choisie est l'anode 2 (voir tableau I), portée au potentiel de 4,9 volts. La quantité d'électricité dépensée est de 10,2 coulombs par millilitre. L'effluent choisi a les mêmes caractéristiques que celui donné dans l'exemple 2 ci-dessus. Les performances de la décontamination sont résumées dans le Tableau IV qui donne le pourcentage de radioéléments éliminés par les précipités électroformés. On voit que le procédé est extrêmement efficace en ce qui concerne la décontamination en strontium et en antimoine puisqu'on atteint pour ces éléments des taux de décontamination respectivement de plus de 99% et plus de 92%. Les performances en ce qui concerne le ruthénium sont également très bonnes puisqu'on atteint un taux de décontamination de 61% qui est encore bien supérieur au taux obtenu avec le procédé selon l'art antérieur.

## TABLEAU IV

| ELEMENT | $^{125}Sb$ | $^{90}Sr$ | $^{106}Ru$ | $^{137}Cs$ | ACTINIDES |
|---------|------------|-----------|------------|------------|-----------|
| TD % | 92,3 | 99,5 | 61 | 72 | >86 |

Le graphique de la figure 3 donne les quantités de ruthénium, d'antimoine et de strontium restant dans l'effluent de l'exemple 3, en fonction de la quantité d'électricité dépensée dans le circuit, l'anode utilisée étant l'anode 2. On voit sur cette figure que la radioactivité diminue de façon non linéaire, et que la décontamination en strontium est plus rapide que celle de l'antimoine ou du ruthénium. L'effet de décontamination est très net à partir d'environ 1 ou 2 C/ml.

## EXEMPLE 4 :

Dans cet exemple, on a travaillé avec l'anode 3, portée au potentiel de 4,9 volts. Quantité d'électricité dépensée dans le circuit : 10,7 coulombs par millilitre. L'effluent utilisé a une composition identique à celui utilisé dans l'exemple 2. Le Tableau V résume les taux de décontamination avec encore des valeurs très élevées en ce qui concerne le strontium et le césium.

TABLEAU V

| ELEMENT | $^{125}$Sb | $^{90}$Sr | $^{106}$Ru | $^{137}$Cs | ACTINIDES |
|---------|-----------|-----------|------------|------------|-----------|
| TD % | 89,9 | 98,3 | 48 | 98 | >86 |

La figure 4 donne, pour cet exemple 4, l'évolution des quantité d'antimoine et de strontium restant dans l'effluent, en fonction de la quantité d'électricité dépensée. Cette figure est à rapprocher de la figure 2. Une décontamination efficace est obtenue lorsqu'on a atteint 10 coulombs par millilitre. Mais, là encore, un effet très net se produit à partir de 1 ou 2 C/ml, notamment pour le strontium.

**Revendications**

1. Anode consommable constituée d'un alliage métallique comportant :

   - entre 20 et 70% en masse de fer,
   - entre 20 et 40% en masse de cobalt,
   - entre 5 et 30% en masse d'aluminium,

   la somme totale des pourcentages en masse de ces trois éléments étant inférieure ou égale à 100%.

2. Anode consommable selon la revendication 1, comportant en outre du nickel, à moins de 20% en masse.

3. Anode consommable selon l'une quelconque des revendications 1 ou 2, comportant en outre du titane, à moins de 10% en masse.

4. Anode consommable selon l'une quelconque des revendications 1 à 3, comportant en outre du cuivre, à moins de 5% en masse.

5. Anode consommable selon l'une quelconque des revendications 1 à 4, comportant en outre du niobium, à moins de 5% en masse.

6. Utilisation d'une anode selon l'une des revendications 1 à 5 pour un procédé de décontamination d'effluents liquides radioactifs, comportant les étapes suivantes :

   - placer, dans l'effluent liquide, ladite anode et une cathode,
   - ramener le pH de l'effluent à une valeur supérieure ou égale à 1,
   - établir un courant continu entre les électrodes, en maintenant le potentiel de l'anode à une valeur supérieure ou égale à 2 volts/ENH.

7. Utilisation selon la revendication 6, le potentiel de l'anode étant maintenu à une valeur proche de 5 volts/ENH.

8. Utilisation selon l'une des revendications 6 ou 7, caractérisée en ce qu'on fait circuler le courant dans le circuit jusqu'à ce que la quantité d'électricité dépensée soit supérieure ou égale à 8 coulombs par millilitre.

9. Utilisation selon l'une des revendications 6 à 8, comportant en outre les étapes suivantes :

   - extraction des boues formées dans le réacteur,
   - réinjection, dans ce réacteur, d'une partie des boues extraites,
   - séparation de l'autre partie des boues extraites par séparation solide/liquide.

10. Dispositif pour la mise en oeuvre d'un procédé de décontamination d'effluents liquides radioactifs, comportant :

- un réacteur (2) pour recevoir l'effluent à décontaminer,
- une anode (10) selon l'une des revendications 1 à 5,
- une cathode (12),
- une alimentation en courant continu (14) à laquelle sont reliées l'anode et la cathode,
- des moyens (5) pour porter le pH de l'effluent à une valeur supérieure ou égale à 1.

11. Dispositif selon la revendication 10, comprenant en outre une électrode de référence (16).

12. Dispositif selon la revendication 10, comprenant en outre un moyen (18) de contrôle de la température et un échangeur thermique (20) permettant de maintenir la température de l'effluent à une température donnée.

13. Dispositif selon l'une des revendications 10 à 12, comportant en outre :

- des moyens (24) pour extraire du réacteur les boues formées dans celui-ci,
- des moyens (30) pour recycler dans le réacteur une partie des boues extraites,
- des moyens (32, 34) de séparation solide/liquide pour traiter une autre partie des boues extraites.


**Patentansprüche**

1. Opferanode, gebildet durch eine Metall-Legierung, enthaltend:

- zwischen 20 und 70% Massenanteil Eisen,
- zwischen 20 und 40% Massenanteil Kobalt,
- zwischen 5 und 30% Massenanteil Aluminium,

wobei die Gesamtsumme der Massenanteile dieser drei Elemente niedriger oder gleich 100% ist.

2. Opferanode nach Anspruch 1, die außerdem Nickel mit wenigstens 20% Massenanteil umfaßt.

3. Opferanode nach einem der Ansprüche 1 oder 2, die außerdem Titan mit wenigstens 10% Massenanteil umfaßt.

4. Opferanode nach einem der Ansprüche 1 bis 3, die außerdem Kupfer mit wenigstens 5% Massenanteil umfaßt.

5. Opferanode nach einem der Ansprüche 1 oder 4, die außerdem Niobium mit wenigstens 5% Massenanteil umfaßt.

6. Verwendung einer Anode nach einem der Ansprüche 1 bis 5 für ein Verfahren zur Dekontamination von flüssigen radioaktiven Abfällen, das folgende Schritte umfaßt:

- Anbringen der besagten Anode und einer Kathode in dem flüssigen Abfall,
- Zurückführen des pH-Werts des Abfalls auf einen Wert höher oder gleich 1,
- Herstellen eines Gleichstroms zwischen den Elektroden durch Aufrechterhaltung des Potentials der Anode auf einem Wert höher oder gleich 2 Volt/ENH bzw. NWE (Normalwasserstoffelektrode).

7. Opferanode nach Anspruch 6, wobei das Potential der Anode auf einem Wert nahe 5 Volt/NWE gehalten wird.

8. Opferanode nach einem der Ansprüche 6 oder 7, dadurch gekennzeichnet, daß man den Strom in dem Kreis fließen läßt, bis die verbrauchte Elektrizitätsmenge größer oder gleich 8 Coulomb pro Milliliter ist.

9. Opferanode nach einem der Ansprüche 6 bis 8, außerdem folgende Schritte umfassend:

- Entnehmen der in dem Reaktor gebildeten Schlämme,
- Wiedereinleiten eines Teils der entnommenen Schlämme in diesen Reaktor,
- Trennen des anderen Teils der entnommenen Schlämme mittels Festkörper/Flüssigkeits-Trennung.

10. Vorrichtung zur Anwendung eines Verfahrens zur Dekontamination von flüssigen radioaktiven Abfällen, umfassend:

- einen Reaktor (2) zur Aufnahme des zu dekontaminierenden Abfalls,
- eine Anode (10) nach einem der Ansprüche 1 bis 5,
- eine Kathode (12),
- eine Gleichstromversorgung (14), mit der die Anode und die Kathode verbunden sind,
- Einrichtungen (5), um den pH-Wert des Abfalls auf einen Wert höher oder gleich 1 zu bringen.

11. Vorrichtung nach Anspruch 10, die außerdem eine Bezugselektrode (16) umfaßt.

12. Vorrichtung nach Anspruch 10, die außerdem eine Temperaturkontrolleinrichtung (18) und einen Wärmetauscher (20) umfaßt, die ermöglichen, die Abfalltemperatur auf einem bestimmten Temperaturwert zu halten.

13. Vorrichtung nach einem der Ansprüche 10 bis 12, außerdem umfassend:

- Einrichtungen (24), um die in dem Reaktor gebildeten Schlämme aus diesem zu entnehmen,
- Einrichtungen (30), um einen Teil der entnommenen Schlämme in den Reaktor zurückzuleiten,
- Festkörper/Flüssigkeits-Trenneinrichtungen (32, 34), um einen anderen Teil der entnommenen Schlämme zu behandeln.

## Claims

1. Consumable anode constituted by a metal alloy comprising between 20 and 70 wt.% iron, between 20 and 40 wt.% cobalt and between 5 and 30 wt.% aluminium, the total sum of the weight percentages of these three elements being equal to or below 100.

2. Consumable anode according to claim 1 also comprising less than 20 wt.% nickel.

3. Consumable anode according to claims 1 or 2, also comprising less than 10 wt.% titanium.

4. Consumable anode according to any one of the claims 1 to 3, also comprising less than 5 wt.% copper.

5. Consumable anode according to any one of the claims 1 to 4, also comprising less than 5 wt.% niobium.

6. Use of an anode according to any one of the claims 1 to 5 for a process for the decontamination of radioactive liquid effluents comprising the following stages:

- placing said anode and a cathode in the liquid effluent,
- bringing the pH of the effluent to a value equal to or above 1,
- establishing a direct current between the electrodes, whilst maintaining the potential of the anode at a value equal to or above 2 V/NHE.

7. Use according to claim 6, the potential of the anode being kept at close to 5 V/NHE.

8. Use according to either of the claims 6 and 7, wherein the current is made to circulate in the circuit until the consumed electricity quantity is equal to or above 8 coulombs/millilitre.

9. Use according to any one of the claims 6 to 8, also comprising the following stages:

- extraction of the sludge formed in the reactor,
- reinjection into said reactor of part of the extracted sludge,
- separation of the other part of the extracted sludge by solid/liquid separation.

10. Apparatus for performing a process for the decontamination of radioactive liquid effluents comprising:

- a reactor (2) for receiving the effluent to be decontaminated,
- an anode (10) according to any one of the claims 1 to 5,
- a cathode (12),
- a direct current supply (14) to which are connected the anode and the cathode,

- means (5) for raising the pH of the effluent to a value equal to or above 1.

11. Apparatus according to claim 10, also comprising a reference electrode (16).

12. Apparatus according to claim 10, also comprising a temperature control means (18) and a heat exchanger (20) making it possible to maintain the temperature of the effluent at a given level.

13. Apparatus according to any one of the claims 10 to 12 also comprising:

- means (24) for extracting from the reactor sludge formed therein,
- means (30) for recycling into the reactor part of the extracted sludge,
- solid/liquid separation means (32, 34) for treating another part of the extracted sludge.

FIG. 1

FIG. 2

FIG. 3

FIG. 4